# EUROPÄISCHE PATENTSCHRIFT

(11) **EP 0 580 643 B1**
(45) Veröffentlichungstag und Bekanntmachung des Hinweises auf die Patenterteilung: **10.09.1997**
(21) Anmeldenummer: 92907747.7
(22) Anmeldetag: 07.04.1992
(51) Int. Cl.: D06F 39/00

(54) **VERFAHREN ZUM WASCHEN UND VORRICHTUNG ZUM DURCHFÜHREN DES VERFAHRENS**
PROCESS AND DEVICE FOR WASHING
PROCEDE ET DISPOSITIF DE LAVAGE

(30) Priorität: 16.04.1991 DE 4112417
(43) Veröffentlichungstag der Anmeldung: 02.02.1994
(73) Patentinhaber: Henkel Kommanditgesellschaft auf Aktien, 40191 Düsseldorf (DE)
(72) Erfinder: MÜLLER-KIRSCHBAUM, Thomas, D-5650 Solingen 19 (DE); SMULDERS, Eduard, D-4010 Hilden (DE); HÖFER, Wolgang, D-4000 Düsseldorf 1 (DE)
(86) Internationale Anmeldenummer: EP9200785
(87) Internationale Veröffentlichungsnummer: WO9218680

(56) Entgegenhaltungen:
- EP-A- 0 193 825
- FR-A- 2 455 648
- US-A- 3 645 669
- US-A- 3 881 344
- US-A- 4 416 148

## Beschreibung

Die Erfindung betrifft zum einen ein Verfahren zum Waschen von Faserstoffen, Häuten, Textilmaterialien oder dergleichen mit einer wässrigen, Tenside enthaltenden Waschflüssigkeit, die durch Zugabe von Waschmittel zu Wasser erhalten wird.

Die im gewerblichen Bereich und bei Privathaushalten durchgeführten Waschverfahren sind schon seit einiger Zeit Ziel von Bestrebungen, diese Verfahren in ökologischer und ökonomischer Hinsicht zu verbessern. Dabei wird eine Verringerung des Einsatzes von Energie, Waschmittel, Wasser und Zeit angestrebt. Um diese Ziele zu erreichen, werden häufig spezielle Dosiersysteme und Dosierverfahren eingesetzt. Eine besondere Schwierigkeit beim Einsatz spezieller Dosierverfahren liegt darin, daß einerseits möglichst wenig Waschmittel und Wasser verbraucht werden soll, aber andererseits die von einer Anzahl von Parametern abhängigen Mindestdosierungen nicht unterschritten werden sollen, damit die Waschkraft und die Waschleistung nicht auf unakzeptable Werte absinken. Für jede Art von zu waschendem Material, Verschmutzungen, Wasserhärten und Waschmitteln sowie Temperaturen und Art der mechanischen Bewegung existiert eine optimale Waschmittelkonzentration. Diese läßt sich rein empirisch daraus ermitteln, daß bei einem Unterschreiten dieser Konzentration das Waschergebnis auf nicht mehr akzeptable Werte abfällt und bei einem Überschreiten keine Verbesserung des Waschergebnisses erzielt wird. Um in der Praxis unter stark wechselnden Bedingungen immer die optimale Waschmitteldosierung zu erreichen, ist es notwendig, den genannten optimalen Waschpunkt schon während des Waschverfahrens automatisch zu ermitteln.

Aus JAOCS, Vol. 1963, 1986, Seite 931 bis 934 ist es bekannt, die Oberflächenspannung des Waschwassers in einer mechanischen Spülmaschine zu erfassen und diesen Meßwert zur Steuerung der Zugabe von Detergentien zu verwenden. Ob und auf welche Weise der optimale Waschpunkt bei einem Verfahren zum Waschen von Faserstoffen, Häuten, Textilmaterialien oder dergleichen mittels Messung der Oberflächenspannung erfaßbar und zur Steuerung der Zugabe von Waschmittel verwendbar ist, ist jedoch nicht bekannt. In anderen bekannten Waschverfahren wird die Dosierung mit Hilfe der Messung der Leitfähigkeit, des pH-Wertes und der Trübung (Laboratory Practice, 1984, Seite 69) gesteuert. Diese bekannten Dosierungsverfahren führen jedoch zu unbefriedigenden Ergebnissen. Als weiterer einschlägiger Stand der Technik werden US-PS 3,881,344 und US-PS 4,416,148 genannt.

Der Erfindung liegt daher die Aufgabe zugrunde, in dem eingangs genannten Verfahren zum Waschen immer die in nachträglichen Waschversuchen bestimmbaren Mindestdosierungen automatisch zu errreichen, ohne daß die Waschkraft und die Waschleistung auf unakzeptable Werte absinkt. Dieses Ziel soll außerdem bei unterschiedlichsten Waschbedingungen, wie der Art der zu waschenden Materialien, des Waschmittels, der Wasserhärte, der Mechanik, der Verschmutzungen, etc., erreicht werden, ohne daß das erfindungsgemäße Verfahren speziell an diese Waschbedingungen angepaßt zu werden braucht.

Diese Aufgabe wird dadurch gelöst, daß während des Waschverfahrens die Oberflächenspannung der Waschflüssigkeit mit einem Tensiometer, insbesondere kontinuierlich gemessen wird, daß aus diesen Meßwerten die aktuelle Waschmittelkonzentration (Wert 1) und aus der zugegebenen Menge an Waschmittel und der zugegebenen Wassermenge eine Konzentration an Waschmittel (Wert 2) insbesondere laufend ermittelt und die Waschmittelwirkung (Wert 2 - Wert 1) /Wert 2 berechnet werden und daß die Zugabe von Waschmittel abgebrochen wird, wenn die Waschmittelwirkung abnimmt. Vorteilhaft ist dabei ein Bubble-Tensiometer, das mit hinreichend konstanten Gasströmen, insbesondere Luftströmen betrieben wird.

Dabei ist es wichtig, daß nur die zeitliche Änderung, aber nicht die absolute Höhe der Waschmittelwirkung in die Dosierungssteuerung eingeht. Da die maximale Waschmittelwirkung vom Verschmutzungsgrad, dem Waschmittel und anderen Waschbedingungen abhängt, ist damit das Verfahren ohne eine spezielle Anpassung an bestimmte Waschbedingungen universell einsetzbar. Das genannte Bubble-Tensiometer ist an sich bekannt und z.B. von F.J. Schork und W.H. Rey in "Journal of Applied Polymer Science", Vol 28, 1983, Seiten 407 bis 430 beschrieben und soll daher an dieser Stelle nicht näher erläutert werden.

Mit dem erfindungsgemäßen Verfahren wird der oben genannte optimale Waschpunkt automatisch erreicht, denn wie nachstehend gezeigt wird, fällt dieser Punkt mit dem Maximum der Größe Waschmittelwirkung, also mit deren Optimum zusammen.

Eine vorteilhafte Ausgestaltung, in der die Waschmittelwirkung sehr genau erfaßbar ist, besteht darin, daß das Waschmittel diskontinuierlich in mehreren einzelnen Portionen zugegeben und die Waschmittelwirkung ab einem Zeitpunkt ermittelt wird, wenn nach der Zugabe einer der Portionen die Oberflächenspannung nicht mehr wesentlich ansteigt.

Eine weitere Einsparung von Energie und Zeit wird erreicht, wenn bei oder nach dem Abbruch der Zugabe des Waschmittels auch der Waschvorgang beendet wird. Dann kann mit dem Abpumpen und/oder dem Spülen begonnen werden.

Bei der Ermittlung der Oberflächenspannung kann einerseits die Differenz der maximalen Blasendrücke gemessen werden und anderseits die zeitliche Rate der aus dem Bubble-Tensiometer strömenden Blasen erfaßt werden. Die erstgenannte Methode wird dabei vorgezogen.

Wichtig ist ferner, daß das Tensiometer mit konstanten Gasströmen betrieben wird. Diese können durch Regulieren variabler Gasströme oder auch mittels gleichmäßig arbeitender Pumpen erzeugt werden.

Das Verfahren eignet sich sowohl zum Dosieren von flüssigen als auch von festen oder pastösen Waschmitteln.

Zur Regelung der Dosierung sind im Rahmen der Erfindung mehrere Möglichkeiten gegeben. In einer einfachen Version kann alternierend die Waschflüssigkeit bewegt und die Oberflächenspannung gemessen werden. Je nach Meßergebnis wird dann weiteres Waschmittel zugegeben oder die Waschmittelzugabe gestoppt. Andererseits kann bei einem Waschverfahren mit kontinuierlich umlaufender Waschflüssigkeit die Oberflächenspannung des umlaufenden Teils der Waschflüssigkeit insbesondere kontinuierlich gemessen werden. Voraussetzung für die Messung der Oberflächenspannung ist nämlich nur, daß die Flüssigkeit im Bereich des Tensiometers nicht zu heftig bewegt wird. Ein großer Vorteil des erfindungsgemäßen Verfahrens liegt aber andererseits in dem nur äußerst geringen für das Tensiometer benötigten Volumen an Waschflüssigkeit, so daß das erfindungsgemäße Verfahren entsprechend dem ersten Anspruch durch einfaches Umrüsten bei einer Vielzahl unterschiedlichster Waschmaschinentypen ohne Änderung der Waschmaschinenprogramme und -steuerungen und ohne Änderung der Waschwirkungseigenschaften der Waschgeräte anwendbar ist. So kann andererseits auch die Oberflächenspannung im Laugensumpf gemessen werden.

In einer weiteren Ausbildung der Erfindung wird die Temperaturabhängigkeit der Oberflächenspannung während der Messung korrigiert. Dies kann durch Einbeziehung der Meßwerte eines Thermosensors in die Dosierungsregelung erfolgen.

Erfindungsgemäß läßt sich nicht nur die erforderliche Menge an Waschmittel und damit auch die notwendige Waschzeit einsparen, was dann auch zu einer Energieminimierung führt, sondern es läßt sich auch die für den Waschvorgang benötigte Menge an Ausspülwasser verringern. Denn es wird ferner vorgeschlagen, daß das Ausspülen beendet wird, wenn die gemessene Oberflächenspannung einen vorgegebenen Maximalwert überschreitet.

Die Erfindung betrifft nicht nur das bisher genannte Verfahren zum Waschen, sondern auch eine Vorrichtung zum Durchführen dieses Verfahrens. Die erfindungsgemäße Aufgabe wird in dieser Vorrichtung dadurch gelöst, daß an konstante Gasstromquellen angeschlossene und in die Waschflüssigkeit mit gleicher Tiefe eintauchende Kapillaren vorgesehen sind, die mit einer Einrichtung zum Erfassen des Drucks oder der Druckänderungsfrequenz verbunden sind, die über eine Auswerteeinheit eine Dosiereinheit für das Waschmittel steuert, wobei die Auswerteeinheit zur Berechnung der aktuellen Waschmittelkonzentration (Wert 1) aus den erhaltenen Meßwerten, zur Berechnung der Konzentration an Waschmittel (Wert 2) aus der zugegebenen Menge an Waschmittel und Wasser sowie zur Berechnung der Waschmittelwirkung ((Wert 2 - Wert 1/Wert 2) und zur Ansteuerung der Dosiereinheit (14) ausgelegt ist, so daß diese die Zugabe von Waschmittel abbricht, wenn die Waschmittelwirkung ((Wert 2 - Wert 1)/Wert 2) abnimmt.

Um die Menge an Ausspülwasser zu reduzieren, wird in dieser erfindungsgemäßen Vorrichtung vorgeschlagen, daß die Auswerteeinheit mit dem das Ausspülen betätigende Steuerteil verbunden ist.

Im foigenden wir die Erfindung anhand von Zeichnungen und Ausführungsbeispielen näher erläutert. Es zeigen
Figur 1 nach einem Standardverfahren ermittelte Waschergebnisse für Pulver-Universalwaschmittel, aufgetragen über der Dosierung,
Figur 2 Waschergebnisse für Flüssig-Universalwaschmittel, ebenfalls ermittelt nach einem Standardverfahren und aufgetragen über der Dosierung,
Figur 3 den Zusammenhang zwischen der Konzentration eines Pulver-Universalwaschmittels und dem gemessenen Differenzdruck des Tensiometers,
Figur 4 das gleiche für ein Flüssig-Universalwaschmittel,
Figur 5 die Konzentrationsänderungen einer Waschlauge als Effekt des Waschvorgangs in Abhängigkeit von der Konzentration für ein Pulver-Universalwaschmittel,
Figur 6 das gleiche für ein Flüssig-Universalwaschmittel und Waschgut ohne Standardanschmutzungen,
Figur 7 das gleiche für ein Flüssig-Universalwaschmittel und Waschgut mit Standardanschmutzungen,
Figur 8 die relative Waschmittelwirkung, ermittelt aus Tensiometer-Messungen für ein Pulver-Universalwaschmittel,
Figur 9 das gleiche für ein Flüssig-Universalwaschmittel und Waschgut ohne Standardanschmutzungen,
Figur 10 das gleiche für Waschgut mit Standardanschmutzungen,
Figur 11 die Abnahme der Waschreserve während eines Waschganges, aufgetragen über der Zeit und gemessen mit dem Tensiometer und
Figur 12 eine schematische Darstellung eines Ausführungsbeispiels der erfindungsgemäßen Vorrichtung.

Die im folgenden beschriebenen Waschversuche wurden mit einem Pulver-Universalwaschmittel und einem Flüssig-Universalwaschmittel vorgenommen. Das Waschgut war 3,5 kg normal verschmutzte Haushaltswäsche mit und ohne zusätzliche Standardanschmutzungen. Es wurde mit einem Einlaugen-Verfahren gearbeitet, wobei zwischen 50 und 170 g des Pulverwaschmittels, abgestuft in Schritten von 20 g und 50 bis 175 ml des Flüssigwaschmittels, abgestuft in Schritten von 25 ml eindosiert wurden. Die Waschtemperatur betrug 60 °C. Zur Auswertung der Waschversuche wurden Proben von 1 l Waschlauge beim ersten Abpumpen entnommen.

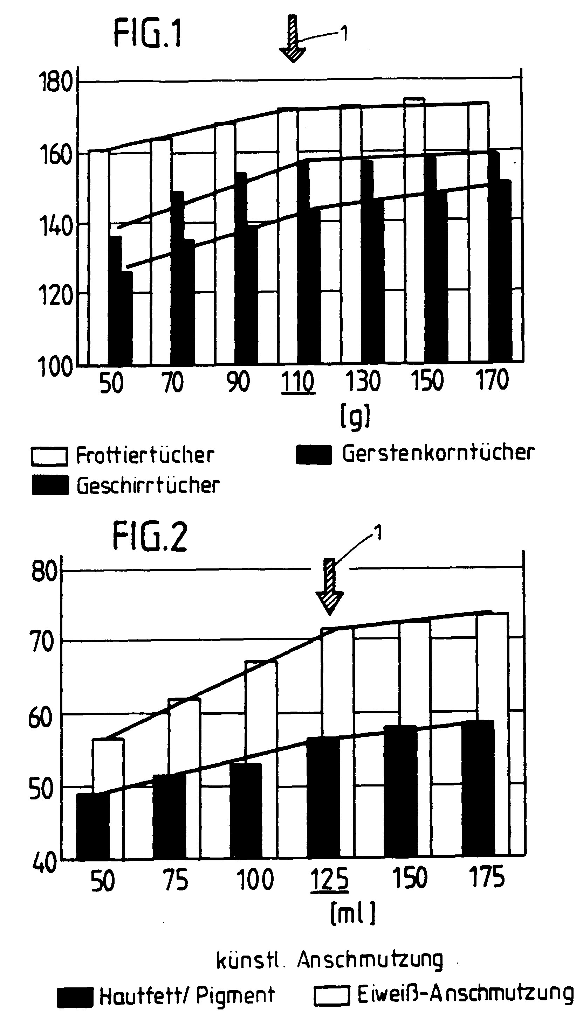

Um die optimale Dosierung von Waschmitteln herauszufinden, werden üblicherweise Waschversuche mit unterschiedlichen Dosierungen und unterschiedlichem Waschgut vorgenommen und danach die Remission der Wäschestücke gemessen. Die Figuren 1 und 2 zeigen solche auf bekanntem Wege gewonnenen Meßergebnisse. Figur 1 zeigt die Berger-Weißwerte für Frottiertücher, Geschirrtücher und Gerstenkorntücher nach 15 Wäschen mit einem Pulver-Universalwaschmittel im Einlaugen-Verfahren bei 60 °C. Aus diesem Diagramm ist zu entnehmen, daß bei steigender Dosierung die Weißwerte ansteigen, bis etwa bei einer Dosierung von 110 g ein Plateau erreicht wird. Diese Dosierung stellt den optimalen Waschpunkt, markiert mit einem Pfeil 1, dar. Diese Messungen sind also erst nach Beendigung des Waschvorganges möglich.

Ein entsprechendes Diagramm findet sich in Figur 2 für ein Flüssig-Universalwaschmittel. Hier ist die Remission in Prozent über der Dosierung aufgetragen. Die Waschergebnisse wurden ebenfalls in einem Einlaugen-Verfahren bei 60 °C gewonnen. Wie in Figur 1 steigt das Waschergebnis, die Primärwaschkraft, an, bis sie bei einer Dosierung von 125 ml ein Plateau erreicht. Diese Dosierung bildet also in diesem Fall den durch den Pfeil 1 markierten optimalen Waschpunkt.

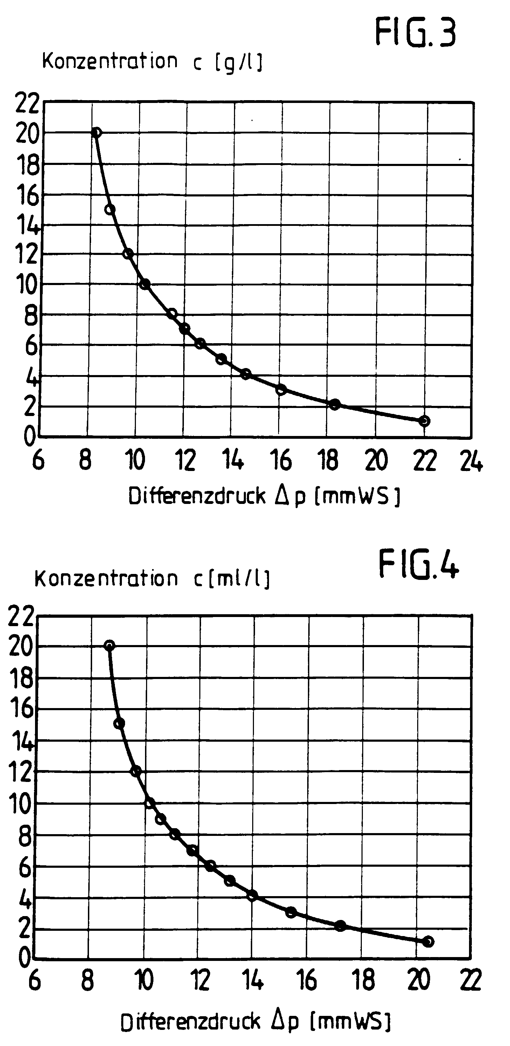

Nachstehend wird gezeigt, wie erfindungsgemäß dieser optimale Waschpunkt schon während des Waschvorganges ermittelt und zur automatischen Dosierungssteuerung einer Waschmaschine verwendet werden kann. Dazu ist es notwendig, aus den mit einem Tensiometer gewonnenen Werten die Konzentration des Waschmittels in der Waschflotte zu bestimmen. Wie die Figuren 3 und 4 zeigen, existiert ein klarer und eindeutiger Zusammenhang zwischen dieser Konzentration und dem mit dem Tensiometer gemessenen Differenzdruck. Ein ebensolcher Zusammenhang existiert zwischen der Konzentration und der mit dem Tensiometer gemessenen Druckänderungsrate, so daß diese ebenfalls im erfindungsgemäßen Verfahren alternativ herangezogen werden könnte. Figur 3 zeigt also eine Kalibrierkurve für ein Pulver-Universalwaschmittel und Figur 4 eine solche Kurve für ein Flüssig-Universalwaschmittel.

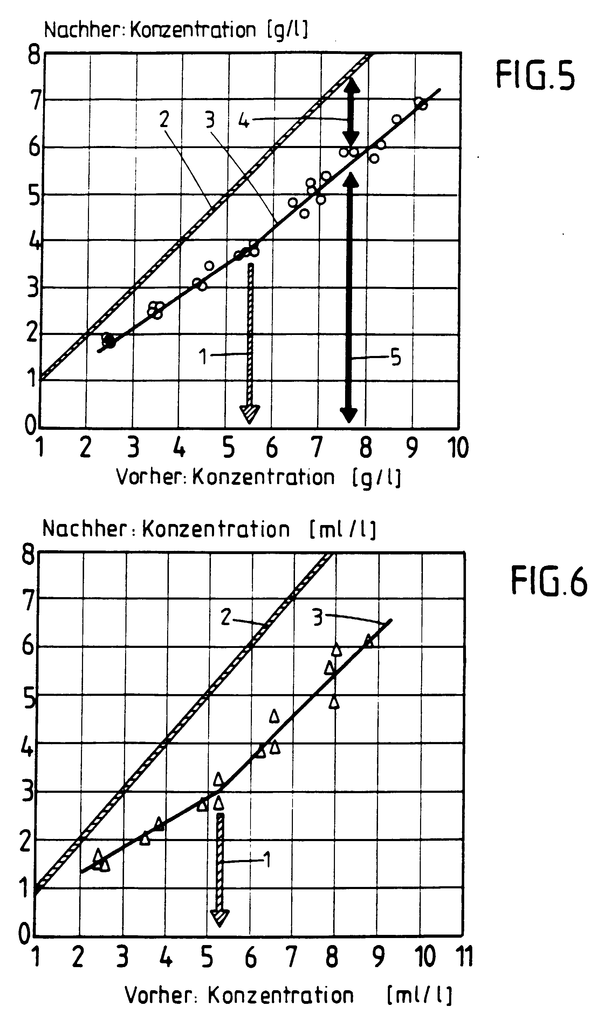

Die folgenden Diagramme in den Figuren 5, 6 und 7 erläutern das Prinzip, aufgrund dessen die erfindungsgemäße Ermittlung des optimalen Waschpunkts mit dem Tensiometer möglich ist. In Figur 5 sind die aus Tensiometer-Messungen erhaltenen Konzentrationswerte von Waschflotten, die vorstehend als Wert 1 bezeichnet wurden, über der aus der zudosierten Menge an Waschmittel und der Wassermenge berechneten Konzentration aufgetragen. Diese Werte wurden für nach dem Waschvorgang von 3,5 kg normal verschmutzter Haushaltswäsche erhaltene Waschflotten und Pulver-Universalwaschmittel gemessen. Die aus zudosierter Waschmittelmenge und Wassermenge berechneten Konzentrationswerte entsprechen den Konzentrationswerten der Waschflotte vor dem Waschvorgang und wurden vorstehend als Wert 2 bezeichnet.

Ohne den Einfluß der verschmutzten Haushaltswäsche würde man die Linie 2 der gleichen Konzentration erhalten. Tatsächlich wird jedoch nach dem Waschvorgang die Linie 3 gefunden. Die durch den Doppelpfeil 4 markierte Differenz der beiden Linien 2 und 3 stellt die Waschmittelmenge dar, die an Schmutz und Textilien adsorbiert wurde. Dagegen wird durch den Doppelpfeil 5 die Waschmittelmenge veranschaulicht, die nach dem Waschen in der Flotte zurückbleibt. Aus Figur 5 ist ersichtlich, daß Linie 3 bei einer Konzentration von 5,5 g/l nach oben hin abknickt. Dieser Effekt ist dadurch zu erklären, daß bei höheren Dosierungen kein Waschmittel mehr an Schmutz und Textilien adsorbiert wird und zusätzlich eindosiertes Waschmittel praktisch nur in die Waschflotte geht. Die Dosierung von 5,5 g/l entspricht einer Dosierung von 110 g für 3,5 kg normal verschmutzter Haushaltswäsche und damit entsprechend Figur 1 dem optimalen Waschpunkt. Diese optimale Dosierung ist daher wieder durch den Pfeil 1 gekennzeichnet. Hier wie in den anderen Figuren kennzeichnen gleiche Bezugszeichen gleiche Gegenstände.

Figur 6 zeigt den gleichen Zusammenhang wie Figur 5, aber für Flüssig-Universalwaschmittel und normal verschmutzte Haushaltswäsche ohne Standardanschmutzungen. Hier liegt der Knick in der Linie 3 bei einem Wert 2 von 5,2 ml/l, der einer Dosierung von 104 ml für 3,5 kg normal verschmutzte Haushaltswäsche entspricht. Der Wert entspricht ebenfalls ziemlich genau dem aus Standardverfahren entsprechend Figur 1 und 2 ermittelten optimalen Waschpunkt.

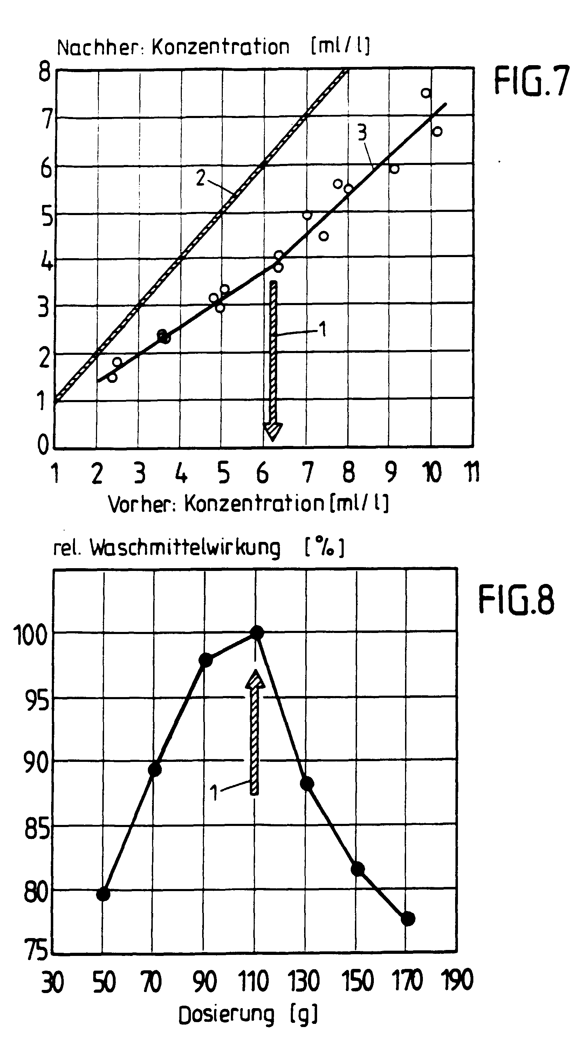

Figur 7 zeigt den gleichen Zusammenhang wie in Figur 6, aber für normal verschmutzte Haushaltswäsche mit zusätzlichen Standardanschmutzungen. Hier wurde ein Abknicken der Linie 3 bei einem Wert 2 von 6,1 ml/l festgestellt, welcher einer Dosierung von 122 ml für 3,5 kg normal verschmutzte Haushaltswäsche entspricht. Ein Vergleich mit Figur 2 zeigt, daß auch hier das Abknicken der Kurve 3 am optimalen Waschpunkt erfolgt.

Um die soeben geschilderten Zusammenhänge für die Entwicklung eines automatischen Dosiersystems zu nutzen, wird die Größe Waschmittelwirkung, abgekürzt WMW, als der Quotient aus der Konzentrationsdifferenz vor und nach dem Waschvorgang, die in Figur 5 durch den Doppelpfeil 4 dargestellt ist, und der Konzentration vor dem Waschvorgang definiert. Es handelt sich also dabei um die Größe (Wert 2 - Wert 1) /Wert 2. Wie noch gezeigt wird, liegt der optimale Waschpunkt bei derjenigen Waschmittelmenge, für die die Waschmittelwirkung WMW ihr Maximum erreicht. An diesem Waschpunkt dient soviel Waschmittel wie nötig zur Schmutzaufnahme, aber gleichzeitig geht so wenig Waschmittel wie möglich ungenutzt ins Abwasser.

Aus den in den Figuren 5 bis 7 dargestellten Ergebnissen können also die folgenden Aussagen abgeleitet werden. Mit steigender Einsatzmenge des Waschmittels steigt die zur Schmutzaufnahme verwendete Waschmittelmenge und ebenfalls die in der Flotte nach dem Waschen vorhandene Waschmittelmenge. Aber ab einer bestimmten Grenzkonzentration steigt die in der Flotte vorhandene Waschmittelmenge stärker als die zur Schmutzaufnahme benötigte Menge. Daher existiert ein optimales Verhältnis zwischen der zur Schmutzdispergierung bzw. - emulgierung verbrauchten Waschmittelmenge und der übrigen nicht zur Schmutzaufnahme beitragenden, in der Flotte zurückbleibenden Waschmittelmenge.

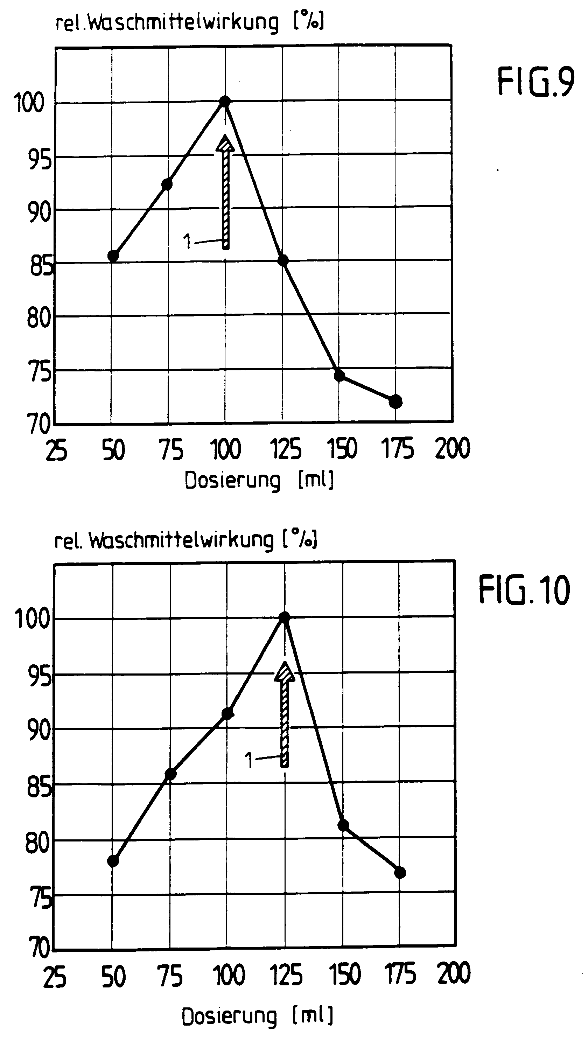

In den Figuren 8 bis 10 ist die Waschmittelwirkung in Abhängigkeit von der Dosierung unter bestimmten Bedingungen dargestellt. Es ist hier die "relative Waschmittelwirkung" als Quotient aus der Waschmittelwirkung und der maximalen Waschmittelwirkung unter den jeweils herrschenden Waschbedingungen aufgetragen. Die Ergebnisse in Figur 8 wurden mit Pulver-Universalwaschmittel, diejenigen in Figur 9 und 10 mit Flüssig-Universalwaschmittel, und zwar in Figur 9 bei Wäsche ohne Standardanschmutzungen und in Figur 10 bei Wäsche mit zusätzlichen Standardanschmutzungen erhalten. Ein Vergleich der maximalen Werte der relativen Waschmittelwirkung mit den in Figur 1 und 2 bestimmten optimalen Waschpunkten führt zu der Feststellung, daß das Maximum der relativen Waschmittelwirkung gerade bei diesem optimalen Waschpunkt liegt. Werden also aus Konzentrationsmessungen während des Waschvorgangs die jeweiligen relativen oder absoluten Waschmittelwirkungen in Abhängigkeit von der Zugabe von Waschmittel bestimmt, so läßt sich schon während des Waschvorgangs die Dosierung derart einstellen, daß der optimale Waschpunkt erreicht wird, obwohl der Verschmutzungsgrad der Wäsche und andere Parameter bei jedem Waschvorgang unterschiedlich sein können.

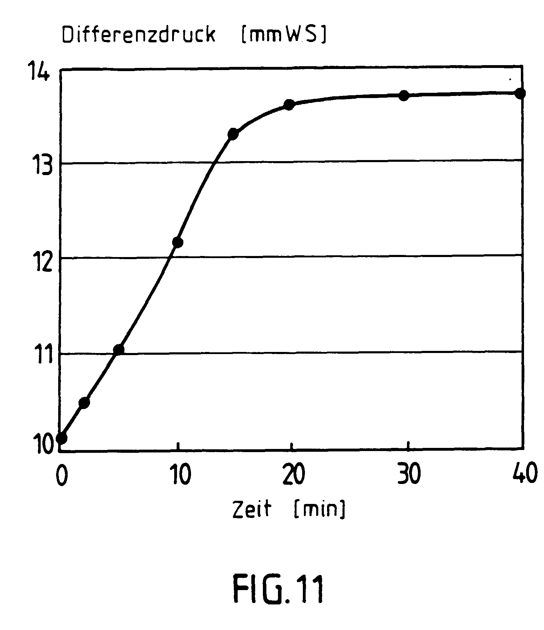

So wird bei einer bevorzugten Ausführungsform des erfindungsgemäßen Verfahrens die Waschmittelmenge portionsweise, z.B. in Portionen von 10 g oder 10 ml zugegeben. Nach jeder Zugabe sinkt die Oberflächenspannung zunächst ab, um danach bei der Dispergierung von Verschmutzungen wieder anzusteigen. Wenn die Oberflächenspannung einen etwa konstanten Wert erreicht hat, wird die Waschmittelwirkung aus der bisher zugegebenen Menge an Waschmittel und Wasser sowie dem Ergebnis der jetzt vorgenommenen Tensiometer-Messung ermittelt. Nach einer weiteren Zugabe einer Portion des Waschmittels und dem erneuten Abfallen und wieder Ansteigen der Oberflächenspannung wird wiederum die Waschmittelwirkung ermittelt, sobald die Oberflächenspannung einen etwa konstanten Wert erreicht hat, der nicht mit dem bisherigen konstanten Wert übereinzustimmen braucht. Erhält man einen geringeren Wert der Waschmittelwirkung als beim letzten Mal, so wird die Zugabe von Waschmittel und der Waschvorgang abgebrochen. Steigt jedoch die Waschmittelwirkung an, so wird der Zyklus wiederholt. In Figur 11 ist die Abnahme der Waschreserve, gemessen als Differenzdruck des Tensiometers, während des Waschvorganges über der Zeit aufgetragen. Es ist hier zu erkennen, wie die Oberflächenspannung während der Schmutzdispergierung nach einer Zugabe einer Portion des Waschmittels ansteigt, um nach einer gewissen Zeit einen etwa konstanten Wert zu erreichen, wie zuletzt ausgeführt wurde.

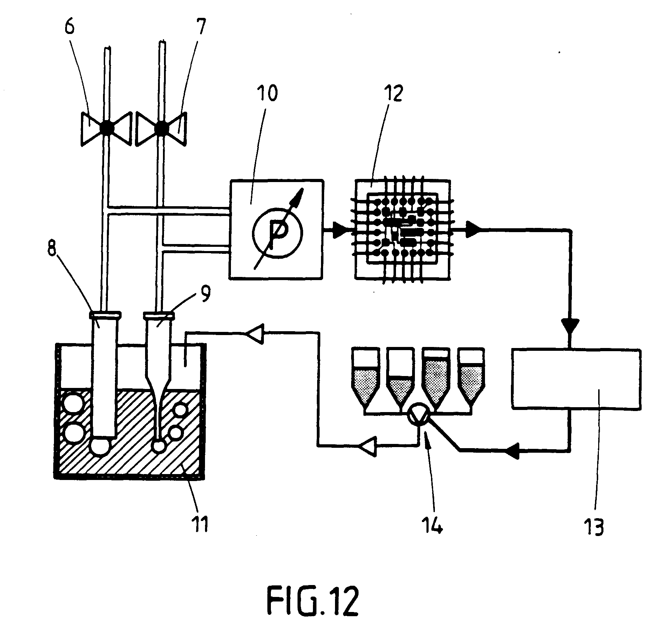

Figur 12 zeigt ein Ausführungsbeispiel der erfindungsgemäßen Vorrichtung. In diesem Fall wurde das Tensiometer mit Druckluft versorgt. Um konstante Luftströme zu erreichen, wird die Druckluft mittels der Ventile 6 und 7 geregelt, bevor sie zwei Kapillaren 8 und 9 zugeführt wird. Diese Kapillaren tauchen in die Waschflotte 11 ein. Mit einer Meßeinrichtung 10 wird die Druckdifferenz der Zuführungen zu den beiden Kapillaren 8 und 9 ermittelt. Die Meßwerte werden von einem Rechner 12 ausgewertet, um die Oberflächenspannung, die Tensidkonzentration und die Waschmittelwirkung zu erhalten. Mit diesen Werten wird eine Dosierungssteuerung 13 gespeist, die an eine Dosiereinheit 14 für flüssiges oder festes Waschmittel angeschlossen ist.

### Bezugszeichenliste

- 1: den optimalen Waschpunkt markierender Pfeil
- 2: Linie gleicher Konzentration
- 3: Linie der aus Tensiometerwerten erhaltenen Konzentrationen
- 4: Doppelpfeil
- 5: Doppelpfeil
- 6: Ventil
- 7: Ventil
- 8: Kapillare
- 9: Kapillare
- 10: Meßeinrichtung
- 11: Waschflotte
- 12: Rechner
- 13: Dosierungssteuerung
- 14: Dosiereinheit

## Patentansprüche

1. Verfahren zum Waschen von Faserstoffen, Häuten, Textilmaterialien oder dergleichen mit einer wäßrigen, Tenside enthaltenden Waschflüssigkeit, die durch wiederholte Zugabe von Waschmittel zu Wasser erhalten wird, wobei während des Waschens die Oberflächenspannung der Waschflüssigkeit mit einem Tensiometer gemessen wird,
**dadurch gekennzeichnet,**
daß aus diesen Meßwerten die aktuelle Waschmittelkonzentration (Wert 1) und aus der zugegebenen Menge an Waschmittel und der zugegebenen Wassermenge die Konzentration an Waschmittel (Wert 2) berechnet werden und daraus die Waschmittelwirkung ((Wert 2 - Wert 1)/Wert 2) berechnet wird und daß die Zugabe von Waschmittel abgebrochen wird, wenn die Waschmittelwirkung ((Wert 2 - Wert 1/Wert 2) abnimmt.

2. Verfahren nach Anspruch 1,
**dadurch gekennzeichnet,**
daß als Tensiometer ein Bubble-Tensiometer eingesetzt wird, das mit hinreichend konstanten Gasströmen, insbesondere Luftströmen betrieben wird.

3. Verfahren nach Anspruch 1 oder 2,
**dadurch gekennzeichnet,**
daß das Waschmittel diskontinuierlich in mehreren einzelnen Portionen zugegeben und die Waschmittelwirkung ab einem Zeitpunkt berechnet wird, wenn nach der Zugabe einer der Portionen die Oberflächenspannung nicht mehr wesentlich ansteigt.

4. Verfahren nach einem der Ansprüche 1 oder 3,
**dadurch gekennzeichnet,**
daß bei oder nach dem Abbruch der Zugabe des Waschmittels auch der Waschvorgang beendet wird.

5. Verfahren nach einem der Ansprüche 2 bis 4,
**dadurch gekennzeichnet,**
daß zur Ermittlung der Oberflächenspannung die Differenz der maximalen Drücke der im Bubble-Tensiometer erzeugten Blasen gemessen wird.

6. Verfahren nach einem der Ansprüche 2 bis 4,
**dadurch gekennzeichnet,**
daß zur Ermittlung der Oberflächenspannung die zeitliche Rate der aus dem Bubble-Tensiometer strömenden Blasen gemessen wird.

7. Verfahren nach einem der Ansprüche 2 bis 6,
**dadurch gekennzeichnet,**
daß die konstanten Gasströme durch Regulieren variabler Gasströme oder mittels gleichmäßig arbeitender Pumpen erzeugt werden.

8. Verfahren nach einem der Ansprüche 1 bis 7,
**dadurch gekennzeichnet,**
daß flüssiges, festes oder pastöses Waschmittel zugegeben wird.

9. Verfahren nach einem der Ansprüche 1 bis 8,
**dadurch gekennzeichnet,**
daß alternierend die Waschflüssigkeit bewegt und die Oberflächenspannung gemessen wird.

10. Verfahren nach einem der Ansprüche 1 bis 8,
**dadurch gekennzeichnet,**
daß bei einem Waschverfahren mit kontinuierlich umlaufender Waschflüssigkeit die Oberflächenspannung des umlaufenden Teils der Waschflüssigkeit insbesondere kontinuierlich gemessen wird.

11. Verfahren nach einem der Ansprüche 1 bis 9,
**dadurch gekennzeichnet,**
daß die Oberflächenspannung im Laugensumpf gemessen wird.

12. Verfahren nach einem der Ansprüche 1 bis 11,
**dadurch gekennzeichnet,**
daß die Temperaturabhängigkeit der Oberflächenspannung während der Messung korrigiert wird.

13. Verfahren nach einem der Ansprüche 1 bis 12,
**dadurch gekennzeichnet,**
daß das Ausspülen beendet wird, wenn die gemessene Oberflächenspannung einen vorgegebenen Maximalwert überschreitet.

14. Maschine zum Waschen von Faserstoffen, Häuten, Textilmaterialien oder dergleichen in einer wäßrigen, Tenside enthaltenden Waschflüssigkeit, die durch wiederholte Zugabe von Waschmittel zu Wasser erhalten wird, mit einem Bubble-Tensiometer, das über eine Auswerteeinheit eine Dosiereinheit für das Waschmittel steuert,
**dadurch gekennzeichnet,**
daß das Bubble-Tensiometer an konstante Gasstromquellen angeschlossene und in die Waschflüssigkeit mit gleicher Tiefe eintauchende Kapillaren (8, 9) aufweist, die mit einer Einrichtung (10) zum Erfassen des Drucks oder der Druckänderungsfrequenz verbunden sind, daß die Auswerteeinheit (12) zur Berechnung der aktuellen Waschmittelkonzentration (Wert 1) aus den erhaltenen Meßwerten, zur Berechnung der Konzentration an Waschmittel (Wert 2) aus der zugegebenen Menge an Waschmittel und Wasser sowie zur Berechnung der Waschmittelwirkung ((Wert 2 - Wert 1)/Wert 2) und zur Ansteuerung der Dosiereinheit (14) ausgelegt ist, so daß diese die Zugabe von Waschmittel abbricht, wenn die Waschmittelwirkung ((Wert 2 - Wert 1)/Wert 2) abnimmt.

15. Maschine nach Anspruch 14,
**dadurch gekennzeichnet,**
daß die Auswerteeinheit (12) mit dem das Ausspülen betätigenden Steuerteil verbunden ist.

## Claims

1. A process for washing fibrous materials, skins, textile materials or the like with a water-based surfactant-containing washing liquid which is obtained by repeated addition of detergent to water, the surface tension of the washing liquid being measured with a tensiometer during the washing process, characterized in that the actual detergent concentration (value 1 ) and a concentration of detergent (value 2) are respectively determined from the measurements obtained and from the quantity of detergent added and the quantity of water added and the detergent effect ((value 1 - value 2)/value 2) is calculated therefrom and in that the addition of detergent is terminated when the detergent effect ((value 2 - value 1/value 2) diminishes.

2. A process as claimed in claim 1, characterized in that the tensiometer used is a bubble tensiometer operated with sufficiently constant gas streams, particularly air streams.

3. A process as claimed in claim 1 or 2, characterized in that the detergent is added discontinuously in several individual portions and the detergent effect is calculated from a point in time when, after addition of one of the portions, there is no further significant increase in surface tension.

4. A process as claimed in claim 1 or 3, characterized in that the washing process is terminated during or after termination of the addition of detergent.

5. A process as claimed in any of claims 2 to 4, characterized in that, to determine surface tension, the difference between the maximum pressures of the bubbles produced in the bubble tensiometer is measured.

6. A process as claimed in any of claims 2 to 4, characterized in that, to determine surface tension, the rate at which the bubbles flow from the bubble tensiometer is measured as a function of time.

7. A process as claimed in any of claims 2 to 6, characterized in that the constant gas streams are produced by regulation of variable gas streams or by uniformly operating pumps.

8. A process as claimed in any of claims 1 to 7, characterized in that liquid, solid or paste-form detergent is added.

9. A process as claimed in any of claims 1 to 8, characterized in that the washing liquid is agitated and surface tension is measured in an alternating sequence.

10. A process as claimed in any of claims 1 to 8, characterized in that, where the washing process is carried out with continuously circulating washing liquid, the surface tension of the circulating part of the washing liquid is measured, in particular continuously.

11. A process as claimed in any of claims 1 to 9, characterized in that surface tension is measured in the liquor pumped off.

12. A process as claimed in any of claims 1 to 11, characterized in that the dependence of surface tension on temperature is corrected during the measurement.

13. A process as claimed in any of claims 1 to 12, characterized in that rinsing is terminated when the measured surface tension exceeds a predetermined maximal value.

14. An arrangement for controlling a process for washing fibrous materials, skins, textile materials or the like in a water-based surfactant-containing washing liquid obtained by repeated addition of detergent to water, comprising a bubble tensiometer which controls a dosing unit for the detergent via an evaluation unit, characterized in that the bubble tensiometer comprises capillaries (8,9) which are connected to constant gas stream sources and which dip into the washing liquid to equal depths, being linked to means (10) for determining the pressure or the frequency of changes in pressure, in that the evaluation unit (12) is designed for calculation, particularly continuous calculation, of the actual detergent concentration (value 1) from the measurements obtained, for calculation of the concentration of detergent (value 2) from the quantity of detergent and water added and for calculation of the detergent effect ((value 2 - value 1 )/value 2) and for actuation of the dosing unit (14) so that it terminates the addition of detergent when the detergent effect ((value 2 - value 1)/value 2) diminishes.

15. An arrangement as claimed in claim 14, characterized in that the evaluation unit (12) is connected to the control element which actuates rinsing.

## Revendications

1. Procédé de lavage de fibres, de peaux, de matériaux textile ou analogues avec un liquide de lavage contenant des tensioactifs aqueux qu'on obtient par addition répétée de produit lessiviel dans l'eau, où pendant le lavage on mesure la tension superficielle du liquide de lavage avec un tensiomètre,
caractérisé en ce qu'
à partir de ces mesures, on calcule la concentration réelle de produit lessiviel (valeur 1) et à partir de la quantité ajoutée de produit lessiviel et de la quantité d'eau ajoutée, on calcule la concentration en produit lessiviel (valeur 2) et à partir de ces valeurs on calcule l'efficacité de produit lessiviel ((valeur 2 -valeur 1)/valeur 2) et on arrête l'addition de produit lessiviel quand l'efficacité de produit lessiviel ((valeur 2-valeur 1)/valeur 2) diminue.

2. Procédé selon la revendication 1,
caractérisé en ce qu'
on utilise un tensiomètre à bulle comme tensiomètre, qui fonctionne avec des débits de gaz suffisamment constants, notamment des débits d'air.

3. Procédé selon la revendication 1 ou 2,
caractérisé en ce qu'
on ajoute le produit lessiviel en discontinu en plusieurs portions et on calcule l'efficacité de produit lessiviel si après addition d'une des portions, la tension superficielle n'augmente plus sensiblement.

4. Procédé selon l'une des revendications 1 ou 3,
caractérisé en ce que
pendant ou après l'arrêt de l'addition de produit lessiviel, on arrête aussi le processus de lavage.

5. Procédé selon l'une des revendications 2 à 4,
caractérisé en ce que
pour déterminer la tension superficielle, on mesure la différence entre les pressions maximales des bulles formées dans le tensiomètre à bulles.

6. Procédé selon l'une des revendications 2 à 4,
caractérisé en ce que
pour déterminer la tension superficielle on mesure la vitesse de passage en fonction du temps des bulles s'échappant du tensiomètre à bulles.

7. Procédé selon l'une des revendications 2 à 6,
caractérisé en ce qu'
on produit les débits constants de gaz par régulation des débits de gaz variables ou à l'aide de pompes fonctionnant régulièrement.

8. Procédé selon l'une des revendications 1 à 7,
caractérisé en ce qu'
on ajoute un produit lessiviel liquide, solide ou pâteux.

9. Procédé selon l'une des revendications 1 à 8,
caractérisé en ce qu'
on agite le liquide de lavage par intermittence et on mesure la tension superficielle.

10. Procédé selon l'une des revendications 1 à 8,
caractérisé en ce que
lors d'un processus de lavage avec un liquide de lavage recyclé en continu, on mesure notamment en continu la tension superficielle de la partie recyclée du liquide de lavage.

11. Procédé selon l'une des revendications 1 à 9,
caractérisé en ce qu'
on mesure la tension superficielle dans le bain de lessive.

12. Procédé selon l'une des revendications 1 à 11,
caractérisé en ce qu'
on corrige l'influence de la température sur la tension superficielle pendant la mesure.

13. Procédé selon l'une des revendications 1 à 12,
caractérisé en ce que
le lavage est terminé quand la tension superficielle mesurée dépasse une valeur maximale prescrite.

14. Machine de lavage de fibres, de peaux, de matériaux textiles ou analogues dans un liquide de lavage contenant des tensioactifs aqueux, qu'on obtient par addition répétée de produit lessiviel dans l'eau, avec un tensiomètre à bulles qui commande une unité de dosage par l'intermédiaire d'une unité d'exploitation,
caractérisée en ce que
le tensiomètre à bulles est relié à une source de gaz à débit constant et présente des capillaires (8, 9) plongeant dans le liquide à même profondeur, qui sont reliés à un dispositif (10) pour capter la pression ou la fréquence de variation de pression, que l'unité d'exploitation (12) est conçue pour calculer la concentration réelle en produit lessiviel (valeur 1) à partir des mesures obtenues, pour calculer la concentration en produit lessiviel (valeur 2) à partir de la quantité ajoutée de produit lessiviel et d'eau ainsi que pour calculer l'efficacité du produit lessiviel ((valeur 2-valeur 1)/valeur 2) et pour commander l'unité de dosage (14), de sorte que celle-ci interrompt l'addition de produit lessiviel quand l'efficacité de produit lessiviel ((valeur 2-valeur 1)/valeur 2) diminue.

15. Machine selon la revendication 14,
caractérisée en ce que
l'unité d'exploitation (12) est reliée à la partie de commande actionnant le rinçage.
